# EUROPEAN PATENT APPLICATION

(11) **EP 2 690 701 A1**
(43) Date of publication of application: **29.01.2014**
(21) Application number: 12177584.5
(22) Date of filing: 24.07.2012
(51) Int. Cl.: H01M 12/08, H01M 10/052, H01M 10/0567, H01M 10/0568

(54) **Use of peroxides in metal air batteries**

(71) Applicant: SOLVAY SA, 1120 Bruxelles (BE)
(72) Inventor: Eicher, Johannes, 31319 Sehnde (DE)
(74) Representative: Mross, Stefan P.M.

(57) **Abstract**

The present invention concerns the use of organic acid peroxide salts, e.g. trifluoroacetate peroxide salt, as additives in metal-air batteries, as well as electrolyte compositions and metal-air batteries comprising organic acid peroxide salts.

## Description

The present invention concerns the use of organic acid peroxide salts as additives in metal-air batteries.

Metal-air batteries are suitable as storage media for electrical energy and useful for household items. Lithium-air batteries comprise lithium anodes electrochemically coupled to atmospheric oxygen. The oxygen is usually taken from the atmosphere. The underlying principle is that the battery comprises a metal anode in an anode compartment and a cathode in a cathode compartment. If rechargeable, the metal ions are migrating back to the anode compartment and are reduced to the respective metal, while the oxide is oxidized to oxygen. A lithium-air battery has been described in WO 2011/052440. Another example of a metal-air battery is a zinc-air battery. One example of a zinc-air battery is described in US 2005/0208386.

The object of the present invention is to provide compositions and methods for improved metal-air batteries, e.g. an improved charge-discharge cycle, lower construction costs or higher durability. These and other objects are achieved by the compositions, methods of use and/or metal-air batteries of this invention. One advantage of the invention is the improved oxygen-transport within the metal-air battery. Another advantage can be a relatively flat discharge curve. Yet another advantage can be a better performance in charge-discharge cycles. A further advantage can be a reduction in dendrite formation at certain parts of the battery like for example at the electrodes or can be an improvement in the shape variation of the electrodes.

Thus, the invention concerns the use of a compound of general formula (I), R-C(O)-O-O⁻M⁺, wherein
- R is an organic residue,
- M is a metal
as additive for metal-air batteries, preferably as additive for a zinc-air batteries.

In other words, a method is provided wherein a compound of general formula (I), R-C(O)-O-O⁻M⁺, wherein
- R is an organic residue,
- M is a metal
is used as additive for metal-air batteries, preferably as additive for a zinc-air batteries.

Preferably, compounds are used wherein M is Li. Alternatively preferred are compounds wherein M is Zn_{½}. In another preferred alternative, compounds are used wherein M is Mg_{½}.

The term "organic residue" is intended to denote in particular linear or branched alkyl or alkylene groups which may contain hetero atoms, such as in particular boron, silicon, nitrogen, oxygen or sulphur atoms and halogen atoms, cycloalkyl groups or cycloalkylene groups, heterocycles and aromatic systems. The organic residue may contain double or triple bonds and functional groups. More preferably, compounds are used wherein R is CF₃.

The term "metal" is intended to denote any chemical element belonging to the groups 1 to 12 (s-block and d-block) of the periodic system of elements.

Most preferably, the compound of general formula (I) is CF₃C(O)OO⁻ Li⁺, (CF₃C(O)OO⁻)₂ Zn²⁺, or (CF₃C(O)OO⁻)2 Mg²⁺.

The invention also concerns an electrolyte composition comprising a compound of general formula (I), R-C(O)-O-O⁻M⁺, and further comprising at least one electrolyte solvent and at least one electrolyte salt. R and M have the meanings given above. Preferred compounds of general formula (I) are given above.

Consequently, the use and method, respectively, described above may comprise at least one step wherein the compound of formula (I) is mixed with at least one electrolyte solvent and/or at least one electrolyte salt. Here, the mixing of the compound of formula (I) and the at least one solvent and the at least one electrolyte salt can be performed in the same step, or the compound of formula (I) and the at least one solvent and the at least one electrolyte can be mixed in separate steps.

Additionally, the invention concerns a metal-air battery, preferably a lithium-air battery, comprising an electrolyte composition as described above.

According to the present invention, the compounds of general formula (I), R-C(O)-O-O⁻M⁺, can be present in the electrolyte in a concentration from 0.1 to 10 mol/1, preferably from 0.25 to 5 mol/l, more preferably from 0.5 to 1.5 mol/1.

According to the present invention, electrolyte compositions and metal-air batteries are provided comprising an electrolyte salt which is selected among salts known to the expert to be suitable for this purpose. Such salts have the general formula MetₐA_{b}. Met is a metal cation, and A is an anion. Met is preferably selected from Li⁺, Mg²⁺ and Zn²⁺. Preferred anions are PF₆-, AsF₆⁻, BF₄-, (PO₂F₂)⁻, [N(CF₃SO₂)₂]⁻, [N(i-C₃F₇SO₂)₂]⁻ or ClO₄⁻.

Preferably, Met is Zn²⁺. The concentration of the electrolyte salt is preferably 1 ± 0.1 molar.

According to the present invention, electrolyte compositions and metal-air batteries are provided comprising an electrolyte solvent. Any non-fluorinated and/or fluorinated solvent or solvent mixture known to be useful for rechargeable batteries may be used. The term "fluorinated" denotes partial or total substitution of hydrogen atoms in the solvent. The fluorosubstituted compounds may be contained in lower amounts, e.g. in an amount of 0.1 wt% respective to the total content of solvent, up to about 10 wt% respective to the total amount of solvent. They might then be considered rather as solvent additive than solvent. The content of fluorosubstituted compound may even be higher than 10 wt%, and in this case, they may be considered rather as solvent. Suitable solvents for the electrolyte composition may be selected from the group consisting of linear or cyclic ethers, linear and cyclic esters, linear and cyclic ketones, saturated and unsaturated linear and cyclic alkanes, aromatic hydrocarbons and especially linear and cyclic organic carbonates. Alkyl carbonates and alkylene carbonates are the preferred solvent. The term "alkyl" preferably denotes a C1 to C3 group. The term "alkylene" preferably denotes an alkylene group with a C2, C3 or C4 chain which is arranged between the oxygen atoms of an O-C(O)-O group. The alkylene group may be substituted by one or more C1 to C3 alkyl groups, e.g. by one or two methyl groups and/or one or two ethyl groups. Often, ethylene carbonate (EC) is comprised in the solvent. Propylene carbonate and butylene carbonate are other solvents which may be a suitable constituent of the electrolyte solution. The solvent may instead or additionally contain low viscosity agents, e.g. ethers like 1,2-dimethoxyethane, tetrahydrofuran, 2-methyltetrahydrofuran, 1,3-dioxolane, 4-methyldioxolane, dimethylcarbonate, ethylmethyl carbonate, diethyl carbonate and any mixtures thereof. Nitriles with a C1 to C20 alkyl group, e.g. acetonitrile, dinitriles with a C1 to C20 alkylene group, t-amyl benzene, and thiosubstituted compounds, for example, ethylene-1,3-dioxolane- 2-thione (ethylene thiocarbonate) are also highly suitable non-fluorinated solvents or additives.

As indicated above, the solvent or solvent mixture contained in the electrolyte solution may also comprise or consist of one or more fluorosubstituted organic compounds. For example, at least one fluorosubstituted organic compound which contains at least one heteroatom selected from the group consisting of oxygen, nitrogen, phosphorous, sulfur and silicon may be comprised or constitute the only. In the following, highly suitable fluorosubstituted organic compounds are mentioned which are suitable as solvents or additional solvents. Preferred fluorinated organic compounds are selected from the group consisting of mono fluorinated, difluorinated, trifluorinated, polyfluorinated and perfluorinated organic compounds. Here, the term "polyfluorinated" denotes compounds which are substituted by four or more fluorine atoms, but contain at least one hydrogen atom, or at least one chlorine atom, or at least one hydrogen atom and at least one chlorine atom. Preferably, the monofluorinated, difluorinated, trifluorinated, polyfluorinated and perfluorinated organic compounds are not substituted by chlorine atoms. "Perfluorinated" are those compounds in which all hydrogen atoms are substituted by fluorine atoms.

Preferred fluorinated organic compounds are selected from the group of fluorosubstituted carboxylic acid esters, fluorosubstituted carboxylic acid amides, fluorosubstituted fluorinated ethers, fluorosubstituted carbamates, fluorosubstituted cyclic carbonates, fluorosubstituted acyclic carbonates, fluorosubstituted phosphites, fluorosubstituted phosphoranes, fluorosubstituted phosphoric acid esters, fluorosubstituted phosphonic acid esters and saturated or unsaturated fluorosubstituted heterocycles.

Especially preferred are linear or branched fluorosubstituted dialkyl carbonates and fluorosubstituted alkylene carbonates.

Fluorinated dialkyl carbonates suitable as solvent or solvent additive are those of formula (V)

R¹-O-C(O)-O-R² (V)

In the compounds of formula (V), R¹ and R² can be the same or different with the proviso that at least one of R¹ and R² are substituted by at least one fluorine atom. R¹ and R² are preferably linear alkyl groups with 1 to 8 carbon atoms, preferably, 1 to 4 carbons, more preferably, with 1 to 3 carbon atoms ; branched alkyl groups with 3 to 8 carbon atoms, preferably with 3 carbon atoms ; or cyclic alkyl groups with 5 to 7 carbon atoms, preferably, 5 or 6 carbon atoms ; with the proviso that at least one of R¹ and R² is substituted by at least one fluorine atom.

Highly preferably, R¹ and R² denote linear alkyl groups with 1 to 3 carbon atoms, with the proviso that at least one of R¹ and R² is substituted by at least one fluorine atom. Most preferably, R¹ and R² are selected from the group consisting of methyl, fluoromethyl, difluoromethyl, trifluoromethyl, ethyl, 1-fluoroethyl, 2-fluoroethyl, 1,1-difluoroethyl, 1,2-difluoroethyl, 2,2,2-trifluoroethyl and 1-fluoro-1-methylethyl. Most preferred compounds of formula (V) are methyl fluoromethyl carbonate, fluoromethyl ethyl carbonate, methyl 2,2,2-trifluoroethyl carbonate, fluoromethyl 2,2,2-trifluoroethyl carbonate and bis-2,2,2-trifluoroethyl carbonate.

Even more preferably, fluorosubstituted alkylene carbonates of formula (X) are applied

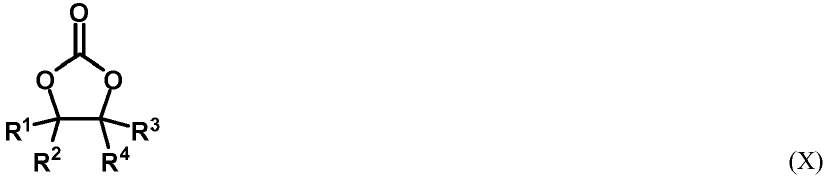

Here, R¹, R², R³ and R⁴ are independently selected from H, linear alkyl groups with 1 to 3 carbon atoms and alkenyl groups with 2 or 3 carbon atom ; linear alkyl groups with 1 to 3 carbon atoms or an alkenyle group with 2 or 3 carbon atoms, substituted by at least one fluorine atom ; and fluorine, with the proviso that at least one of R¹, R², R³ and R⁴ is fluorine or an alkyl group substituted by at least one fluorine atom. The electrolyte solvent contains 0.1 to 100 wt % of the fluorosubstituted organic compound, if such a compound or compounds is or are contained. Often, the fluorinated organic compound is contained in the electrolyte solvent in an amount of equal to or more than 1 wt %, preferably equal to or more than 3 wt %. Often, the content is preferably equal to or lower than 20 wt % relative to the electrolyte solvent set as 100 wt %, and more preferably, equal to or lower than 10 wt %.

The metal-air battery of the present invention preferably comprises a membrane permeable for metal ions.

A suitable metal-air battery comprises a foil anode, a polymer electrolyte (comprising e.g. polyacrylnitrile, a solvent, e.g. propylene carbonate or ethylene carbonate, and an electrolyte salt), a composite positive electrode current collector and an oxygen permeable membrane through which oxygen (from the surrounding air) is transported to the porous carbon electrode.

The negative electrode may be constructed from materials commonly used in metal-ion batteries, e.g. from metallic lithium, zinc or graphite. The collector of the negative pole may be made from metals, e.g. copper, stainless steel, or nickel. The air pole may be made from carbon which is preferably porous. The oxygen pole charge collector may be made from metals, e.g. stainless steel, nickel, aluminium, iron, or titanium. It may have the form of a foil, a grid, or a mesh to provide a high surface. The oxygen pole is separated from the ambient atmosphere by a thin porous membrane to filter dust etc. The battery might comprise a gel-polymer electrolyte membrane or a non-aqueous solvent which serve as ion-transporting medium. To prevent the intrusion of water the cathode compartment may be separated from the surrounding air. Often, a membrane - for example, a Lisicon membrane or a Nasicon membrane - which is permeable for the metal cation, but impermeable for other compounds like water or solvent, serves to effectively separate anode and cathode compartments. If discharged, the respective metal is oxidized to the respective metal cation, the formed cation is transported via membrane and solvent to the cathode compartment.

The electrolyte compositions can be applied in batteries with liquid electrolytes and in battery cells with gel state electrolytes. In gel state electrolytes, the non-aqueous solvents are gelled through the use of a gelling agent such as polyacrylonitrile, polyethylene oxide, polyvinylidene fluoride. Polymerizable monomers that are added to the non-aqueous solvent system and polymerized in situ by the use of heat or radiation may also be used.

In another embodiment, the invention relates to a compound of general formula (I), R-C(O)-O-O⁻M⁺, wherein R is CF₃ and M is a metal, preferably M is Li, Mg_{½} or Zn_{½}.

Should the disclosure of any patents, patent applications, and publications which are incorporated herein by reference conflict with the description of the present application to the extent that it may render a term unclear, the present description shall take precedence.

## Claims

1. Use of a compound of general formula (I), R-C(O)-O-O⁻ M⁺, wherein
- R is an organic residue,
- M is a metal
as additive for metal-air batteries, preferably as additive for a zinc-air batteries.

2. The use according to claim 1 wherein M is Zn_{½}.

3. The use according to claim 1 wherein M is Li.

4. The use according to claim 1 wherein M is Mg_{½}.

5. The use according to any one of claims 1 to 4 wherein R is CF₃.

6. The use according to claim 1 wherein the compound of general formula (I) is CF₃C(O)OO⁻ Li⁺, (CF₃C(O)OO⁻)₂ Zn²⁺, or (CF₃C(O)OO⁻)₂ Mg²⁺.

7. An electrolyte composition comprising a compound of general formula (I), R-C(O)-O-O⁻M⁺, wherein R is an organic residue, preferably CF₃, and M is a metal, preferably Zn_{½}, Li or Mg_{½}, and most preferably Zn_{½}, and further comprising at least one electrolyte solvent and at least one electrolyte salt.

8. A metal-air battery comprising an electrolyte composition according to claim 7.

9. The metal-air battery according to claim 8 wherein the metal-air battery is a lithium-air battery, magnesium-air battery or zinc-air battery.

10. The metal-air battery according to claim 8 or 9 wherein the concentration of the compound of general formula (I), R-C(O)-O-O⁻M⁺ in the electrolyte, is 0.1 to 10 mol/1.

11. A compound of general formula (I), R-C(O)-O-O⁻ M⁺, wherein R is CF₃ and M is a metal, preferably M is Zn_{½}, Li, orMg_{½}.
